**Europäisches Patentamt**

**European Patent Office**

**Office européen des brevets**

(19)

(11) Publication number: **0 229 527**
**A2**

(12) # EUROPEAN PATENT APPLICATION

(21) Application number: **86310171.3**

(22) Date of filing: **29.12.86**

(51) Int. Cl.³: **B 65 D 81/34**
**C 08 L 77/00**

(30) Priority: **31.12.85 GB 8531934**

(43) Date of publication of application:
**22.07.87 Bulletin 87/30**

(84) Designated Contracting States:
**DE FR GB IT**

(71) Applicant: **DU PONT CANADA INC.**
**Box 2200 Streetsville Postal Station**
**Mississauga Ontario L5M 2H3(CA)**

(72) Inventor: **Winthrop, Donna Leslie**
**821 Somerset Crescent**
**Kingston Ontario K7P 1G3(CA)**

(74) Representative: **Ellis, John Clifford Holgate et al,**
**MEWBURN ELLIS & CO. 2/3 Cursitor Street**
**London EC4A 1BQ(GB)**

(54) **Dual-ovenable food containers.**

(57) An injection moulded food container is made from a blend of a partially crystalline polyamide and a compatibilized olefin-based polymer, optionally containing filler. Such a food container is suitable for containing and cooking frozen foods in conventional or microwave ovens.

EP 0 229 527 A2

The present invention relates to an ovenable container, e.g., a tray. Ovenable trays are used in the pre-packaged food industry. Usually food is placed on such trays, the trays are lidded and the lidded trays are placed in food refrigerators or freezers.

It is known to sell foods, e.g. meals, in lidded trays, to consumers with the intention that the food in the lidded trays may be heated or cooked in a conventional, convection oven or a microwave oven. Such trays are often known in the trade as dual-ovenable trays. Most commonly such dual-ovenable trays are made by thermoforming sheets of crystallizable polyethylene terephthalate. Polyethylene terephthalate has been used for manufacture of dual ovenable trays because of its high melting point.

Canadian Patent 1 022 356 to Duffield et al, which issued 1977 December 13, discloses a method of continuous melt thermoforming thermoplastic polymers to form substantially inflexible open containers, e.g., pie plates, trays. Such polymers include polyamides, ethylene polymers, acetals, polycarbonates, polysulphones and polyacrylates. Polyamides, e.g., nylon 6 and nylon 66 are indicated as being preferred, especially those having a relative viscosity in the range of about 25 to 65. The containers are disclosed as having a thickness in the range of 2 to 30 mils (0.05 to 0.75 mm). It is further disclosed that the thermoplastic polymers may contain additives, e.g., stabilizers, pigments, fillers and/or nucleating agents. Fillers especially useful for polyamides are disclosed as being calcium carbonate, calcium silicate, kaolin, calcined kaolin, aluminium silicate, magnesium silicate, e.g., talc, silica and silane-treated silica and silicate fillers, particularly in amounts of 20-60 wt % of the fillers.

It is known that thermoforming processes may waste up to 40% of the feedstock. Such waste must either be recycled, scrapped or sold for some other end use. Thermoformed trays tend to be nonuniform in thickness, particularly at corners in the tray. This nonuniformity often leads to physical weaknesses in the tray or causes the other parts of the tray to be unnecessarily thick. While it is recognized that injection moulding processes would overcome such difficulties, commercially it has not been found possible to injection mould trays with sufficiently thin walls from polyethylene terephthalate and for reasons which will be explained later, it has not been thought possible to use polyamides for microwave applications.

Canadian Patent 1 019 867 to D. H. Dawes, which issued 1977 October 25 relates to compositions of polyamides and alumina lakes. It is disclosed that articles may be formed by extrusion or injection moulding of such compositions. The continuous melt thermoforming process of Canadian Patent 1 022 356 is exemplified. It is also disclosed that such compositions may also contain fillers, stabilizers and the like. Copper salts and wollastonite are exemplified.

Canadian Patent 1 193 400 to R. A. Zelonka, which issued 1985 September 10 relates to a foamable polyamide composition comprising 0.2 to 10 parts by weight of zinc, iron or copper carbonates per 100 parts of polyamide. Preferred polyamides have a relative viscosity of 25 to 65, although those with relative viscosities of up to at least 250 may be used. Such compositions may be extruded by known methods, including injection moulding and continuous melt thermoforming processes. It is also disclosed that fillers, e.g., wollastonite, talc, mica, in amounts up to about 40 wt %, and nucleating agents, e.g., silica, calcium silicate, may be added to the composition. The examples show foamed melt thermoformed pie plates having thicknesses of from 0.41 to 0.89 mm.

U.S. Patent 4 585 823 to Saito et al, which issued 1986 August 29, discloses microwavable ovenware moulded from wholly aromatic polyester. It is indicated that thermal resistance, stiffness and mould shrinkage of resins are generally improved by blending the resin with a fibrous reinforcing agent, e.g., glass fibre, carbon fibres, or powder- or slice-form inorganic filler, e.g., calcium carbonate, magnesium carbonate, aluminium hydroxide, glass beads, titanium dioxide, mica, molybdenum disulphide, graphite. It is disclosed that addition of talc and rutile-type titanium dioxide in certain aromatic polyesters caused a large reduction in mechanical strength but such a drawback may be mitigated by the addition of wollastonite and titanium dioxide to the aromatic polyester.

Because of the recent rapid acceptance of microwave ovens, the demand for thermoformed crystallized polyethylene terephthalate trays has grown dramatically, partly because of its technical, aesthetic and cost advantages compared to, for example, microwavable trays of coated paperboard or thermoset polymers. For dual ovenable trays, it is also important for the trays to withstand temperatures of up to about 230°C without softening or warping and down to about -40°C without breaking while being handled or transported. It is known that polyamides absorb microwave energy and rapidly become hot upon the continued application of such energy. In addition, the dielectric loss factor increases dramatically as the temperature of the polyamide is raised. As a result, it has heretofore been believed by those skilled in the art that polyamides suitable for the manufacture of trays which may be heated in conventional ovens are unsuitable for more than minimal heating in microwave ovens because absorption of microwave energy would cause softening or melting. It will be noted, for example, in Example IV of Canadian Patent 1 022 356 that melt thermoformed trays of nylon 66, wollastonite, ferric oxide and cupric stearate, containing a frozen food, became hot when heated in a microwave oven for only 20 seconds. Completion of cooking of the food then took place in a conventional oven at 227°C for 20 minutes. Although the disclosure is silent on the point, the example seems to confirm the belief that such polyamide trays cannot withstand microwave energy sufficient to cook the food. Furthermore, in other experiments, 2 and 3 mm thick injection moulded disks of 60 wt % nylon 66 and 40 wt % wollastonite, when heated for 10 minutes in a 625 watt Sanyo (trade mark) microwave oven showed severe melting, degradation or charring. A further disadvantage of polyamide trays made using the melt thermoforming process of Canadian Patent 1 022 356 is that they tend to crack or break under impact at low temperatures, e.g., at -20°C, and tend to distort at oven temperatures, e.g., 225°C.

It has now been found, however, that food contained in an injection moulded container made from a blend of a polyamide and a compatible olefin-based polymer may be heated in a microwave oven for a sufficient time to heat or cook such food provided that the thickness of the container is 1.6 mm or less.

The present invention provides an injection moulded food container having a floor and walls attached thereto, said floor and walls having substantially the same thickness, said thickness being 1.6 mm or less and said container being made from a composition comprising a blend of partially crystalline polyamide, and a compatibilized olefin-based polymer in an amount of from 1 to 30 wt % based upon the composition.

In a preferred embodiment the polyamide is selected from nylon 6 and nylon 66. Nylon 6 having an intrinsic viscosity (IV) in the range of 0.75 to 1.3 dl/g is useful. It is preferred that the intrinsic viscosity be in the range of 0.95 to 1.2 dl/g, particularly 1.0 to 1.1 dl/g. Intrinsic viscosity is measured at 25°C in formic acid (85% acid to 15% water) by methods known in the art. An especially preferred polyamide is nylon 66 having a relative viscosity (RV) in the range of 25 to 250, particularly 40 to 85 and more particularly 45-60. Relative viscosity as shown herein is the ratio of viscosity at 25°C of an 8.4 wt % solution of nylon 66 in 90 wt % formic acid (90% acid to 10% water) to the viscosity at 25°C of the 90 wt % formic acid alone. The polyamide may be a blend of polyamides, e.g., nylon 66 having a relative viscosity of 50 and nylon 66 having a relative viscosity of 200. The polyamide may also be a blend of different polyamides, e.g., nylon 6 and nylon 66.

In another embodiment the polyamide of the container may also be blended with a modifying material selected from the group consisting of fillers, pigments, dyes and mixtures thereof. The polyamide may also contain small quantities of antioxidants, thermal stabilizers, lubricants, release agents, flow modifiers and the like. The specific modifying material chosen will depend on the end-use requirements.

Olefin-based polymer modifying materials tend to make the containers flexible and tough, and more suitable for microwave applications. The compatibilized olefin-based polymers may be olefin-based polymers having polar groups attached thereto which allow the olefin-based polymer and the polyamide to be blended without phase separation. Such compatibilized olefin-based polymers may be in the form of so-called graft copolymers. The compatibilized olefin-based polymers may also be mixtures of compatibilized olefin-based polymers, and olefin-based polymers which are incompatible with the polyamide. Examples of such incompatible polymers include homopolymers of ethylene or propylene, copolymers of ethylene and $C_4$ to $C_{10}$ alpha-olefins, polyisobutylene and poly (4-methylpentene-1). Examples of compatibilized olefin-based polymers include copolymers of ethylene and unsaturated carboxylic acid or ester monomers, e.g., ethylene/vinyl acetate copolymers, ethylene/methyl-acrylate copolymers, ethylene/ethylacrylate copolymers, ethylene/n-butylacrylate copolymers, ethylene/methacrylate copolymers, ethylene/methacrylic acid copolymers and partially neutralized ethylene/ methacrylic acid copolymers (ionomers); hydrocarbon alpha-olefins grafted with unsaturated carboxylic acids or unsaturated anhydrides, e.g., ethylene/acrylate ester copolymer grafted with unsaturated carboxylic acids or unsaturated anhydrides, ethylene/vinyl acetate copolymers grafted with unsaturated carboxylic acids or unsaturated anhydrides, ethylene/$C_4$ to $C_{10}$ alpha-olefin copoly-mers grafted with unsaturated carboxylic acids or unsaturated anhydrides, ethylene homopolymers grafted with unsaturated carboxylic acids or unsaturated anhydrides. The preferred unsaturated carboxylic acid or unsaturated anhydride are maleic acid and maleic anhydride. As indicated hereinbefore, such polyolefin materials must, of course, be compatible with the partially crystalline polyamides useful in this invention.

Useful concentrations of such olefin-based polymer modifying materials fall within the range of 1-30 wt % of the blend, with 10-20 wt % being preferred. Many of the olefin-based polymer modifying materials may be added to improve the toughness of the containers particularly at low temperatures, e.g., polyethylene grafted with maleic anhydride, or to improve impact resistance, e.g., ethylene/methacrylic acid copolymers. With incompatible olefin-based polymers, it is necessary to also add small quantities of a compatibilized olefin-based polymer. For example, small amounts of ionomer, e.g., up to about 5 wt % of the blend, in order to assist in compatibilizing the polyolefin and polyamide. For convenience, however, a graft copolymer as the sole compatibilized olefin-based polymer is preferred.

Ionomer modifying materials in amounts of 1-30 wt % of the blend tend to make the injection moulded containers flexible and tough, properties which are especially important at low temperatures. Zinc ionomers are preferred. However, at high temperatures, e.g., about 230°C, such containers tend to become less rigid and hence they tend to be more suitable for microwave cooking or lower temperature cooking in conventional ovens. Stiffness of such ionomer-modified containers may be improved by addition of inorganic mineral or siliceous fillers, e.g., talc, glass bubbles, kaolin and mica.

Suitable fillers include fibrous inorganic fillers, e.g., glass fibres; fibrous organic fillers, e.g., aramid fibres; powdered fillers, e.g., kaolin, fused quartz, calcium carbonate; siliceous fillers, e.g., glass beads, hollow glass spheres; platy fillers, e.g., talc, mica. The platy fillers are much preferred because they substantially improve the heat distortion characteristics of the injection moulded containers. The platy filler particles should preferably have a largest dimension (hereinafter referred to as "diameter") of less than about 150 μm and a minimum particle diameter to particle thickness ratio (otherwise referred to as the aspect ratio) of about 20:1. It is preferable that the aspect ratio be as large as practical, e.g., as large as 50:1 to 100:1. Wet ground mica is the preferred filler, having a mesh size between 60 and 325 U.S. sieve, particularly between 200 and 325 U.S. sieve. Suitable grades of mica are sold under the trade marks Alsibronz 12 and Huber WG-1. Talc is preferred for light-coloured containers. The fillers may be added in amounts of 1 to 40 wt % of the blend, preferably in amounts of 10 to 30 wt %.

In addition, pigments or dyes may be added for aesthetic effect. In particular, titanium dioxide may be added for opacity. Other pigments may be added for their colour appeal. Antioxidants, e.g., 1,3,5-trimethyl-2,4,6-tris(3,5-di-tertbutyl-4-hydroxy benzyl)benzene, heat stabilizers, e.g., copper salts, processing aids and the like may also be added as are known in the art.

It is also preferred that the container thickness be in the range of 0.38 to 0.90 mm. The container may have stiffening ribs along the floor of the container provided that the thickness of the ribs does not exceed 1.6 mm.

The container may also have a peripheral shaped lip, the purpose of which is to provide a means for attaching a lid to the container and/or to stiffen the container. Attachment of the lid may be by mechanical means, e.g., crimping, or by other means, e.g., adhesive attachment. The peripheral shaped lip, if present, may be thicker than other parts of the tray but must not exceed 1.6 mm in thickness. The shape of the lip may be any one of known forms. The container may also be compartmentalized in order to separate different kinds of food, for example in a two-compartment container, meat may be in one compartment and vegetables in the other. The compartments may be formed using walls within the container. Alternatively, the container may be formed in such a way that each compartment is, in itself, a container and adjacent compartments are joined only at the lip of the walls of the container. The latter construction of the container is more expensive to produce because, in essence, there are two walls between adjacent compartments rather than one, as in the former construction.

The container is preferably tray-shaped, i.e., with relatively shallow walls compared to the surface area of the floor of the container.

The container may be injection moulded by known methods. It will be appreciated by those skilled in the art that it is structurally advantageous for the floor and walls of the container to be joined smoothly, with "curved corners".

The selection of thickness of the container depends in part upon the size of the container and in part upon the composition of the material from which the container is injection moulded. Merely from a structural standpoint, it will be clear that, for a given composition and container design, the thicker the container the stiffer and tougher will be the container. It will also be appreciated, however, that the thicker the container, the heavier and more costly to produce it will be.

The invention also provides a food package comprising food placed in an injection moulded food container having a floor and walls attached thereto, said floor and walls having substantially the same thickness, said thickness being 1.6 mm or less and said container being made from a composition comprising a partially crystalline polyamide, and a compatibilized olefin-based polymer in an amount of from 1 to 30 wt % based upon the composition, said injection moulded container having a lid adhered thereto.

The preferred compositions are as described heretofore.

For foods which have been refrigerated or frozen, it is usual that the container have a lid thereon, although in a microwave oven the lid should normally be perforated to allow steam to escape in a controlled manner.  In conventional oven cooking, the lid is usually removed altogether.  Several types of lids are known where the food is substantially contained between the wall's lip and the floor of the tray.  Such lids may be cardboard, a film or a foil.  When the food sits proud of the wall's lip, the lid may have a dome.  Examples of lids include aluminium foil, nylon film and injection moulded 4-methyl-pentene polymer domed lids.

It is preferred that the trays be injection moulded from previously melt-blended polyamide and modifying materials.  Some additives may be added more conveniently in the injection moulding process, e.g., colorants.

After injection moulding, the containers are filled with food.  Most often, the food consists of an entree comprising meat and one or more vegetables.  The food-filled containers may then be lidded in a coventional manner and the resultant package either refrigerated or frozen.  The thus-cooled food package is transported to grocery shops, supermarkets, or the like for storage and display in freezer or refrigerator cabinets.  The food-filled containers may also be lidded in an inert atmosphere, so that an inert atmosphere remains in the package.  Such food packages may be stored unfrozen or unrefrigerated form.  After sale, the consumer may cook the food in a conventional oven or microwave oven, usually after removing or perforating the lid. The required heating or cooking time may be found by simple experimentation. For example, in order to reheat precooked, refrigerated foods, it may take 2 minutes or more per food serving; in order to cook frozen foods, it may take 5-10 minutes per food serving.

The present invention may be illustrated by the following examples:

Example 1

In order to demonstrate whether trays could be injection moulded using a number of polymers, the following experiments were performed. Trays, 0.76 mm thick and approximately 21 cm by 14 cm wide by 2.0 cm deep were injection moulded using a Battenfeld (trade mark) BK 1300 - 1400, 150 ton injection moulding machine. The processing conditions varied from 280 - 315°C barrel temperature, 35 - 95°C mould temperature and 34.5 - 137.9 MPa injection pressure, depending upon the materials being injection moulded.

Polyethylene terephthalate trays could not be successfully injection moulded because the crystallization process was too slow for commercial application.

While polymethylpentene trays could be injection moulded, they tended to warp and showed low rigidity when hot even when the polymethylpentene was mixed with siliceous fillers.

The polyethylene terephthalate and polymethylpentene compositions are not useful in the present invention.

Nylon 66, blended with up to about 20 wt % ionomer polymers moulded well. The trays performed well in microwave ovens, at 625 watts for 10 minutes, when the trays were filled with frozen food and lidded, or when the trays were filled with water and lidded.

Nylon 66 and uncompatibilized polymethylpentene blends could be moulded but there was phase separation of the polymers.

Example 2

Trays, 1.0 mm thick, about 20.5 cm in diameter and 1.5 cm deep were injection moulded under conditions similar to those indicated in Example 1. The compositions of the trays were as follows:

A.  78.80 wt % nylon 66 having an RV of 48, 19.67 wt % maleic anhydride grafted low density polyethylene, 0.5 wt % of the antioxidant 1,3,5-trimethyl-2,4,6-tris (3,5-di-tert-butyl-4-hydroxybenzyl)benzene 1 wt % titanium dioxide pigment and 0.03 wt % ultramarine blue pigment.

B.  81 wt % nylon 66 having an RV of 60, 18 wt % of a copolymer of 85 wt % ethylene and 15 wt % methacrylic acid, 59% neutralized with sodium ions (sodium ionomer) and having a melt index of 0.9 dg/min, and 1 wt % of a pigment comprising titanium dioxide and yellow pigments.

C.  68.6 wt % nylon 66 having an RV of 48, 17.4 wt % of a copolymer of 90 wt % ethylene and 10 wt % methacrylic acid, 71% neutralized with zinc ions (zinc ionomer) and having a melt index of 1.1 dg/min, 13 wt % glass fibres coated with 0.5 wt % alpha-aminopropyltriethoxysilane (based upon the weight of glass) and 1 wt % titanium dioxide pigment.

Trays of compositions A to C were taken and filled with about 340 g of food in the form of meat, vegetables and rice, lidded with aluminium foil and frozen at -20°C for 24 h. The frozen food, thus-packaged was then cooked in a conventional Kenmore (trade mark) convection oven at 200°C for 40 minutes. All of the trays performed well in such tests. Further samples of trays of compositions A to C were similarly filled with food and lidded with aluminium foil and the food frozen at -20°C for 24 h. The foil was then removed and the tray relidded with a moulded polyethylene domed lid with vent-holes therein. The thus-packaged food was cooked at 625 watts in a Sanyo microwave oven for 7 minutes. All of the trays performed well in such tests, the food being adequately cooked.

Example 3

A number of other compositions comprising blends of nylon 66 and an olefin-based polymer were injection moulded into trays having wall and floor thicknesses of less than 1.6 mm. Each of the following compositions were shown to be satisfactory for low temperature, e.g., -20°C, toughness and high temperature, e.g., 230°C, rigidity.

Composition G:

88.47 wt % nylon 66, having an RV of 60

10.0 wt % ionomer which was a copolymer of 85 wt % ethylene and 15 wt % methacrylic acid, 23% neutralized with zinc ions and having a melt index of 5.5 dg/min

0.5 wt % antioxidant

1.0 wt % titanium dioxide

0.03 wt % ultramarine blue pigment

Composition H:

78.25 wt % nylon 66 having an RV of 40

20 wt % ionomer which was a copolymer of 85 wt % ethylene and 15 wt % methacrylic acid, 59 % neutralized with sodium ions and having a melt index of 0.9 dg/min

0.5 wt % antioxidant

1.0 wt % titanium dioxide

0.25 wt % yellow lake pigment

Composition I:

78.47 wt % nylon 66 having an RV of 40

6.0 wt % ionomer which was a copolymer of 90 wt % ethylene and 10 wt % methacrylic acid,

71 % neutralized with zinc ions and having a
melt index of 1.1 dg/min

14 wt % polyethylene having a density of 0.93
g/cm$^3$ and a melt index of 12.0 dg/min

0.5 wt % antioxidant

1.0 wt % titanium dioxide

0.03 wt % ultramarine blue pigment

Composition J:

78.47 wt % nylon 66 having an RV of 40

20.0 wt % copolymer of 85 wt % ethylene and
15 wt % methacrylic acid, having a density
of 0.97 g/cm$^3$ and a melt index of 21
dg/min

0.5 wt % antioxidant

1.0 wt % titanium dioxide

0.03 wt % ultramarine blue pigment

Composition K:

88.5 wt % nylon 66 having an RV of 50

10.0 wt % copolymer of ethylene and
methacrylate, having a density of 0.94
g/cm$^3$ and a melt index of 6.0 dg/min

0.5 wt % antioxidant

1.0 wt % titanium dioxide

Composition L:

78.47 wt % nylon 6 having an RV of 40

20.0 wt % maleic anhydride grafted polymethylpentene, wherein the polymethylpentene had
a density of 0.83 g/cm$^3$ and a melt index
of 26 dg/min before grafting

0.5 wt % antioxidant

1.0 wt % titanium dioxide

0.03 wt % ultramarine blue pigment

Composition M:

58.47 wt % nylon 66 having an RV of 50

15 wt % maleic anhydride grafted polyethylene, wherein the polyethylene had a density of
0.92 g/cm$^3$ and a melt index of 0.6
dg/min before grafting

25 wt % 325 mesh muscovite wet ground mica

0.5 wt % antioxidant

1.0 wt % titanium dioxide

0.03 wt % ultramarine blue pigment

Composition N:

58.7 wt % nylon 66 having an RV of 50

4.5 wt % ionomer which was a copolymer of 90
wt % ethylene and 10 wt % methacrylic acid,
71 % neutralized with zinc ions and having
a melt index of 1.1 dg/min

10.6 wt % polyethylene having a density of
0.93 g/cm$^3$ and a melt index of 12.0
dg/min

15.8 wt % glass fibres coated with alpha-
amino propyltriethoxysilane

8.8 wt % 200 mesh dry ground muscovite mica

0.5 wt % antioxidant

1.0 wt % titanium dioxide

0.03 wt % ultramarine blue pigment

Composition O:

66.7 wt % nylon 66 having an RV of 40

16.9 wt % ionomer, which was a copolymer of
90 wt % ethylene and 10 wt % methacrylic
acid, 71 % neutralized with zinc ions and
having a melt index of 1.1 dg/min

15.4 wt % calcined kaolin with 1.4 μm
average equivalent spherical diameter

1.0 wt % titanium dioxide.

0229527

- 16 -

CLAIMS:

1. An injection moulded food container having a floor and walls attached thereto, said floor and walls having substantially the same thickness, said thickness being 1.6 mm or less and said container being made from a composition comprising a blend of partially crystalline polyamide, and a compatibilized olefin-based polymer in an amount of from 1 to 30 wt % based upon the composition.

2. A container according to Claim 1 wherein the crystalline polyamide is nylon 6 or nylon 66.

3. A container according to Claim 2 wherein the crystalline polyamide is nylon 66 having an RV of from 25 to 250.

4. A container according to Claim 3 wherein the nylon 66 has an RV of from 40 to 85.

5. A container according to any preceding claim wherein the compatibilized olefin-based polymer is selected from

i) copolymers of ethylene and unsaturated carboxylic acid or unsaturated anhydride or ester monomers, and

ii) hydrocarbon alpha-olefins grafted with unsaturated carboxylic acids or unsaturated anhydrides.

6. A container according to Claim 5 wherein the compatibilized olefin-based polymer is selected from ethylene/vinyl acetate copolymers, ethylene/ methylacrylate copolymers, ethylene/ethylacrylate copolymers, ethylene/n-butylacrylate copolymers, ethylene/methacrylate copolymers, ethylene/methacrylic acid copolymers, partially neutralized ethylene/methacrylic acid copolymers, ethylene/acrylate ester copolymers grafted with unsaturated carboxylic acids or unsaturated anhydrides, ethylene/vinyl acetate copolymers grafted with unsaturated carboxylic acids or unsaturated anhydrides, ethylene/C$_4$ to C$_{10}$ alpha-olefin copolymers grafted with unsaturated carboxylic acids or unsaturated anhydrides, and ethylene homopolymers grafted with unsaturated carboxylic acids or unsaturated anhydrides.

7. A container according to any preceding claim wherein the composition additionally contains from 1 to 40 wt % filler.

8. A container according to any one of claims 1 to 6 wherein the composition additionally contains from 10 to 30 wt % mica or talc.

9. A food package comprising food placed in an injection moulded food container according to any preceding claim, said injection moulded container having a lid adhered thereto.